Europäisches Patentamt

European Patent Office

Office européen des brevets

(19)

(11) Numéro de publication : **0 178 203**
**B1**

(12) **FASCICULE DE BREVET EUROPÉEN**

(45) Date de publication du fascicule du brevet :
23.11.89

(51) Int. Cl.⁴ : **G 02 B  6/28, G 02 B  6/42**

(21) Numéro de dépôt : **85401759.7**

(22) Date de dépôt : **10.09.85**

(54) Coupleur optique perfectionné, en particulier pour fibres optiques, formant coupleur multivoies.

(30) Priorité : **10.09.84 FR 8413843**

(43) Date de publication de la demande :
**16.04.86 Bulletin 86/16**

(45) Mention de la délivrance du brevet :
**23.11.89 Bulletin 89/47**

(84) Etats contractants désignés :
**AT BE CH DE FR GB IT LI LU NL SE**

(56) Documents cités :
**EP--A-- 0 062 103**
**FR--A-- 2 525 777**
**FR--A-- 2 536 546**
**US--A-- 4 346 961**
**RCA TECHNICAL NOTE, no. 1274, juillet 1981, papier 1 ou 2, Princeton, N.J., US ; C.C. NEIL : "Miniature rotator"**

(73) Titulaire : **TONNA ELECTRONIQUE**
**36, avenue Hoche -Z.I.S.-E.**
**F-51000 Reims (FR)**

(72) Inventeur : **Jarret, Bertrand**
**2 Impasse Onze Champs**
**F-57140 La Maxe (FR)**

(74) Mandataire : **Ahner, Francis et al**
**CABINET REGIMBEAU 26, avenue Kléber**
**F-75116 Paris (FR)**

Jouve, 18, rue St-Denis, 75001 Paris, France

EP 0 178 203 B1

**Description**

La présente invention concerne les coupleurs optiques, et plus particulièrement, mais non exclusivement, les coupleurs à fibre optique.

Les coupleurs optiques ont pour but essentiel de diviser un faisceau optique incident issu d'un élément optique principal en une pluralité de faisceaux optiques auxiliaires et de diriger ces faisceaux optiques auxiliaires, selon des chemins optiques différents, vers des éléments optiques auxiliaires respectifs, ou inversement de combiner des faisceaux optiques auxiliaires en un faisceau optique principal.

De nombreux types de coupleurs à fibre optique ont déjà été proposés. Toutefois, les dispositifs jusqu'ici proposés ne donnent pas entière satisfaction.

Comme cela est décrit dans le document FR-A-2 422 977, on a proposé des coupleurs à fibre optique comprenant trois lentilles, un miroir semi-réfléchissant et trois fibres optiques.

De tels dispositifs sont cependant difficilement industrialisables. D'une part, ces dispositifs imposent un nombre de réglages élevé, de l'ordre de douze pour les réglages en position. D'autre part, ces dispositifs sont relativement coûteux.

Différents dispositifs visant à éliminer les inconvénients du coupleur du type décrit dans le document FR-A-2 422 977 ont été proposés.

Certaines de ces propositions sont illustrées dans les documents FR-A-2 525 777, FR-A-2 475 240, FR-A-2 344 855, FR-A-2 198 160, FR-A-2 507 787, GB-A-2 032 132 ou US-A-4 176 908.

Tous ces dispositifs présentent des inconvénients dans la pratique.

L'inconvénient majeur de ces dispositifs est lié à leur coût élevé, prohibitif pour un grand nombre d'applications.

Un autre inconvénient important est dû à la fiabilité aléatoire des dispositifs antérieurement proposés.

La Demanderesse a constaté que les problèmes de fiabilité et de coût des réalisations antérieures étaient dus en grande partie à la difficulté de positionner avec précision les diverses pièces optiques des dispositifs, ou encore de maintenir correctement le positionnement initial en cours d'utilisation, en raison du nombre important de pièces composant les dispositifs classiques. Cela est tout particulièrement le cas lors d'utilisation des coupleurs optiques dans des systèmes soumis à vibrations.

Le problème principal à résoudre, posé par la Demanderesse, est donc de réaliser un coupleur optique comportant un nombre limité de pièces optiques.

En outre, un grand nombre de coupleurs classiques pour fibres optiques requièrent que des usinages soient réalisés sur les fibres optiques. De telles opérations s'avèrent bien entendu délicates à réaliser compte-tenu de la taille des fibres. De plus, ces opérations grèvent le prix des installations antérieures.

La présente invention a donc par ailleurs pour but de proposer un coupleur optique qui n'exige pas d'usinage complexe des éléments optiques, en particulier des fibres optiques, tout en étant très économique, et de bon rendement.

Pour ce faire, la présente invention propose un coupleur optique, adapté pour assurer un couplage optique entre un élément optique principal et au moins deux éléments optiques auxiliaires, qui comprend un support monobloc, en matériau transparent, possédant :

— au moins, une structure à effet de prisme optique, en relief par rapport à une face principale du support, formant diviseur optique, qui présente au moins une face d'entrée et une première face de sortie inclinée en regard de la face d'entrée,

— un moyen de positionnement principal, en relief par rapport à la face principale du support, apte à recevoir l'élément optique principal en regard de la face d'entrée d'une structure effet de prisme optique associée et dans une position telle que l'axe optique de cet élément soit généralement transversal à cette face d'entrée,

— un premier moyen de positionnement auxiliaire, sur le support, apte à recevoir un premier élément optique auxiliaire dans une position telle que celui-ci récupère la fraction réfléchie sur la face de sortie d'une structure associée à effet de prisme optique, d'un faisceau lumineux issu de l'élément optique principal et traversant la face d'entrée, et

— un second moyen de positionnement auxiliaire, en relief sur le support, apte à recevoir un second élément optique auxiliaire dans une position telle que celui-ci récupère la fraction rétractée du faisceau lumineux traversant la face de sortie d'une structure associée à effet de prisme optique.

Selon l'invention, le support monobloc remplit une double fonction à savoir, d'une part le positionnement relatif et la fixation en position des éléments optiques, d'autre part la division du faisceau incident principal en une pluralité de faisceaux auxiliaires (ou la réunion de plusieurs faisceaux incidents auxiliaires en un faisceau principal commun).

On remarquera que le coupleur conforme à la présente invention comprend un nombre minimum de pièces puisque sa structure est limitée à la combinaison d'une pièce support monobloc et des éléments optiques.

Selon l'invention, les lentilles et/ou miroirs semi-réfléchissants sont totalement supprimés. Ainsi une immobilisation relative en position adéquate des différentes pièces du coupleur est garantie même après

2

de longues périodes d'utilisation et ce quelles que soient les conditions de cette utilisation (systèmes soumis à vibrations par exemple).

De ce fait, ledit coupleur conforme à la présente invention s'avère à la fois très fiable, robuste et particulièrement économique.

La présente invention permet ainsi de généraliser l'emploi des fibres optiques.

On notera également que selon le principe du retour inverse de la lumière le coupleur optique précédemment défini peut être utilisé pour combiner une pluralité de faisceaux optiques auxiliaires issus des éléments optiques auxiliaires afin de diriger le faisceau combiné vers un élément optique principal disposé en regard de la face d'entrée d'une structure à effet de prisme optique en relief prévue sur le support.

De façon avantageuse, selon l'invention, la structure en relief à effet de prisme optique, formant diviseur optique comprend une seconde face de sortie apte à récupérer et renvoyer par réflexion, vers un élément optique auxiliaire, la fraction réfléchie sur la première face de sortie, d'un faisceau lumineux traversant transversalement la face d'entrée. Cette disposition permet d'assurer une séparation nette des faisceaux optiques auxiliaires.

Selon une caractéristique préférentielle de l'invention la face d'entrée de la structure en relief à effet de prisme optique formant diviseur optique est plane.

Selon une autre caractéristique préférentielle de l'invention, les axes optiques des éléments optiques sont coplanaires.

Selon un premier mode de réalisation, le moyen de positionnement principal et le second moyen de positionnement auxiliaire sont disposés sur une même face principale du support, le premier moyen de positionnement auxiliaire étant ménagé dans le corps du support de telle sorte que l'axe optique du premier élément optique auxiliaire soit généralement transversal à ladite face principale du support.

Dans un tel mode de réalisation, de préférence, la face d'entrée de la structure en relief à effet de prisme optique, formant diviseur optique, est généralement perpendiculaire à la face principale du support et la ligne d'intersection de la face d'entrée et de la première face de sortie de la structure en relief à effet de prisme optique est sensiblement parallèle à cette face principale. L'expression « ligne d'intersection » ne doit pas être entendue nécessairement comme une ligne d'intersection matérialisée par l'intersection physique de deux faces de la structure en relief à effet de prisme optique ; cette « ligne d'intersection » peut en effet correspondre à une ligne d'intersection imaginaire entre les prolongements de ces faces dans le cas où celles-ci ne s'intersectent pas physiquement.

Selon un second mode de réalisation, tous les moyens de positionnement sont disposés sur une face commune du support, les axes optiques des éléments optiques étant généralement parallèles à celle-ci.

Dans un tel second mode de réalisation, de préférence, la face d'entrée et la première face de sortie de la structure en relief à effet de prisme optique, ainsi que la ligne d'intersection de ces faces sont sensiblement perpendiculaires à ladite face commune du support.

Selon une variante de réalisation formant en particulier coupleur multivoies, le support monobloc possède plusieurs structures en relief à effet de prisme optique disposées en cascade afin de récupérer chacune une fraction réfléchie ou réfractée du faisceau lumineux issu d'une structure disposée en amont sur le chemin optique.

De façon avantageuse, le coupleur optique conforme à cette variante de réalisation comprend une pluralité de moyens de positionnement auxiliaires adaptés pour recevoir chacun un élément optique apte à récupérer une fraction de faisceau issu d'une structure en relief à effet de prisme optique associée.

Selon une autre caractéristique avantageuse de l'invention, l'élément optique principal est une fibre optique.

Selon une autre caractéristique avantageuse de l'invention, la face d'entrée de la structure en relief à effet de prisme optique sert d'appui à l'élément optique principal.

Selon une autre caractéristique avantageuse de l'invention, au moins l'un des éléments optiques auxiliaires comprend une fibre optique.

En variante, au moins l'un des éléments optiques comprend un élément émetteur ou récepteur optique. Les éléments émetteurs de lumière peuvent être formés de diodes lasers ou de diodes électroluminescentes, ou de moyens fonctionnellement équivalents.

Les éléments récepteurs de lumière peuvent être formés de photodiodes, par exemple de photodiodes à avalanche ou de moyens fonctionnellement équivalents.

Selon une autre caractéristique avantageuse de l'invention, la face frontale des fibres optiques est généralement perpendiculaire à l'axe longitudinal de celles-ci. De ce fait, aucun usinage complexe des fibres optiques n'est nécessaire. Par opposition, les coupleurs classiques demandaient la plupart du temps l'usinage de faces inclinées en regard des axes optiques des fibres.

De façon avantageuse, les moyens de positionnement comprennent un évidement complémentaire d'une portion au moins de l'enveloppe extérieure des éléments optiques.

Plus précisément, de façon préférentielle, certains au moins des évidements sont formés de rainures possédant une section droite en « V », pour la réception d'une fibre optique.

Il est également avantageux que l'extrémité des rainures éloignée de la structure en relief soit élargie pour faciliter l'engagement des fibres optiques.

Selon l'invention, les éléments optiques peuvent être soit collés sur le support, soit immobilisés sur les moyens de positionnement à l'aide de pinces élastiques.

Dans ce dernier cas, de façon avantageuse, chaque pince élastique comprend un levier monté pivotant sur le support et rappelé élastiquement vers celui-ci.

D'autres caractéristiques et avantages de la présente invention apparaîtront à la lecture de la description détaillée qui va suivre et en regard des dessins annexés, donnés à titre d'exemples non limitatifs, et sur lesquels :

— la figure 1 représente une vue en coupe selon un plan de coupe transversal référencé I-I sur la figure 2, d'une pièce support d'un coupleur optique conforme à un premier mode de réalisation de la présente invention,

— la figure 2 représente une vue de dessus de la même pièce support conforme à un premier mode de réalisation de la présente invention selon une vue illustrée schématiquement par la flèche référencée II sur la figure 1,

— la figure 3 représente une vue latérale, partiellement en coupe selon le plan de coupe I-I précité, de la même pièce support équipée d'une fibre optique principale et de deux éléments optiques auxiliaires,

— la figure 4 représente une vue en coupe selon un plan de coupe transversal référencé IV-IV sur la figure 5, d'une pièce support d'un coupleur optique conforme à un second mode de réalisation de la présente invention,

— la figure 5 représente une vue de dessus de la même pièce support conforme à un second mode de réalisation de la présente invention selon une vue illustrée schématiquement par la flèche référencée V sur la figure 4,

— la figure 6 représente une vue latérale, partiellement en coupe selon le plan de coupe IV-IV précité de la même pièce support conforme à un second mode de réalisation de la présente invention, équipée d'une fibre optique principale et de deux éléments optiques auxiliaires,

— la figure 7 représente une vue de dessus d'un coupleur optique conforme à un troisième mode de réalisation de la présente invention,

— la figure 8 représente une vue en coupe transversale, selon un plan de coupe référencé VIII-VIII sur la figure 7 de ce coupleur optique conforme à un troisième mode de réalisation de la présente invention,

— la figure 9 illustre une variante de réalisation d'un coupleur optique conforme à la présente invention équipé d'une pince élastique pour l'immobilisation des éléments optiques, la figure 9 représentant une vue latérale de ce coupleur, partiellement en coupe, cette disposition autorisant une immobilisation facile, simple et rapide d'une fibre optique sur le coupleur,

— la figure 10 illustre une vue en coupe de cette variante selon un plan de coupe référencé X-X sur la figure 9,

— la figure 11 illustre une vue de dessus d'un coupleur optique multivoies conforme à un quatrième mode de réalisation de la présente invention,

— la figure 12 illustre le positionnement relatif des axes optiques dans un coupleur à fibre optique conforme à la présente invention.

Pour simplifier les explications, on considérera dans la description détaillée qui va suivre des coupleurs optiques adaptés pour diviser un faisceau optique incident issu d'un élément optique principal (fibre optique ou émetteur de lumière) en une pluralité de faisceaux optiques auxiliaires dirigés respectivement vers des éléments optiques auxiliaires (fibres optiques ou récepteurs de lumière).

Cependant, ces explications ne doivent pas être considérées comme limitatives. Comme cela a été précédemment évoqué, en raison du principe du retour inverse de la lumière, les mêmes coupleurs peuvent être utilisés pour combiner des faisceaux optiques auxiliaires issus d'éléments optiques auxiliaires (fibres optiques ou émetteurs de lumière) en un faisceau optique principal dirigé vers un élément optique principal (fibre optique ou récepteur de lumière).

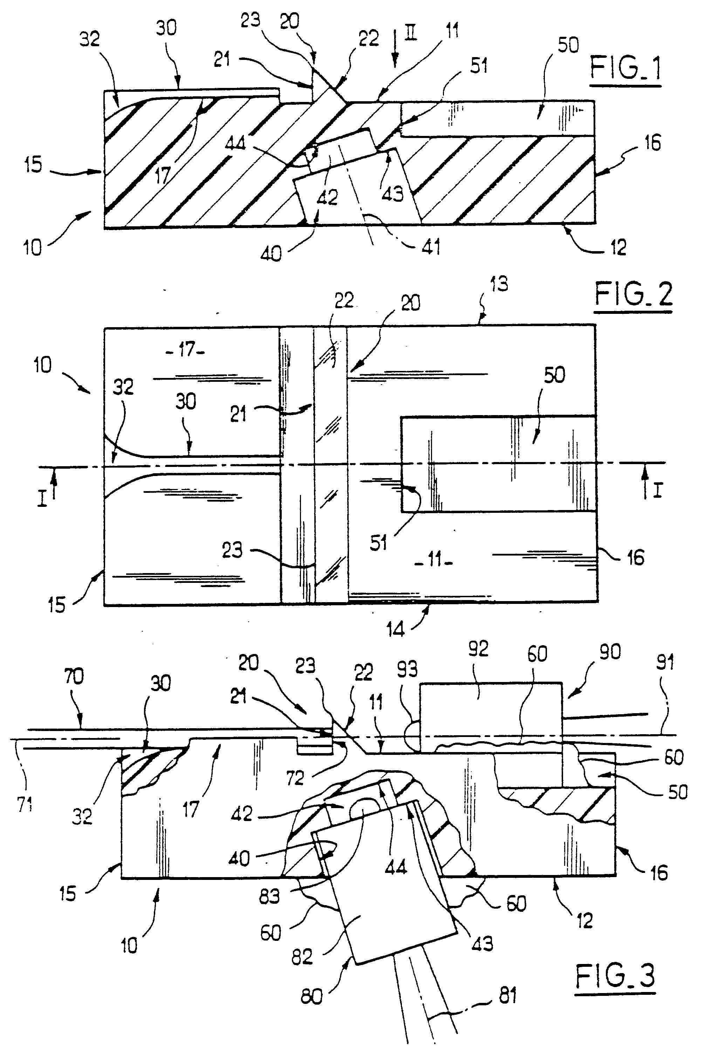

On va décrire dans un premier temps le premier mode de réalisation du coupleur optique conforme à la présente invention représenté schématiquement sur les figures 1 à 3.

Ce coupleur comprend d'une façon générale une pièce support monobloc 10 recevant un élément optique principal 70, en l'occurrence une fibre optique, et deux éléments optiques auxiliaires 80, 90, formés de préférence d'éléments récepteurs optiques.

Les axes optiques des éléments optiques 70, 80 et 90 sont référencés respectivement 71, 81 et 91 sur la figure 3.

L'axe optique 71 de la fibre optique 70 coïncide bien entendu avec l'axe longitudinal central de cette fibre.

Selon le mode de réalisation représenté sur la figure 3, les éléments optiques auxiliaires 80, 90 comprennent chacun un corps 82, 92 d'enveloppe cylindrique ou parallélépipédique muni d'une lentille d'entrée/sortie 83, 93 hémisphérique. Bien entendu, cette lentille d'entrée/sortie 83, 93 est centrée sur l'axe optique respectif 81, 91 de l'élément auxiliaire 80, 90 considéré.

Comme représenté sur les figures 1 à 3, la pièce support 10 est de préférence délimitée par une enveloppe générale parallélépipédique.

Plus précisément, selon le mode de réalisation représenté sur les figures, la pièce support 10 est délimitée par deux faces principales généralement parallèles 11, 12 (perpendiculaires au plan de la figure 1 et parallèles au plan de la figure 2) et quatre faces latérales 13, 14, 15 et 16 parallèles deux à deux et perpendiculaires aux faces principales précitées 11, 12 (perpendiculaires au plan de la figure 2).

Sur la face principale 11, il est prévu une structure en relief 20 formant diviseur optique. Plus précisément, cette structure en relief 20 qui présente une section droite de forme triangulaire (considérée dans un plan perpendiculaire à la face principale 11 et parallèle aux faces latérales 13, 14) est délimitée d'une part par une face d'entrée 21 perpendiculaire à la face principale 11 et parallèle aux faces latérales 15, 16, d'autre part par une face de sortie 22 inclinée en regard de la face d'entrée 11 précitée. De préférence, la face d'entrée 21 et la face de sortie 22 sont planes.

Ainsi, la ligne d'intersection 23 entre la face d'entrée 21 et la face de sortie 22 est parallèle à la face principale 11 et aux faces latérales 15, 16. La valeur de l'inclinaison relative α entre la normale à la face d'entrée 21 et la face sortie 22 sera précisée par la suite.

Il est en outre prévu sur la face principale 11 précitée une rainure 30 qui s'étend généralement parallèlement aux faces latérales 13, 14 entre la face latérale 15 et la face d'entrée 21 de la structure en relief. Cette rainure 30 qui s'étend donc transversalement à la face d'entrée 21 présente une section droite en « V » considérée dans un plan perpendiculaire à la face principale 11 et parallèle aux faces latérales 15, 16.

On remarquera que, de préférence, la rainure 30 est adaptée pour supporter l'élément optique principal 70, en l'occurrence une fibre optique, en regard d'une zone de la face d'entrée 21 non adjacente à la face principale 11. Cette disposition a pour but d'éviter une dispersion du faisceau lumineux traversant la face d'entrée 21 dans la mesure où dans la pratique, la zone de la face d'entrée 21 adjacente à la face principale 11 est rarement rigoureusement perpendiculaire à cette face principale, surtout lorsque la pièce support 10 est réalisée par moulage.

Pour ce faire, selon le mode de réalisation représenté sur les figures, la rainure 30 peut être réalisée dans une portion -17- de la pièce support 10 surélevée par rapport à la face principale 11.

Comme représenté sur les figures 1 à 3, l'extrémité de la rainure 30 éloignée de la structure en relief 20 est de préférence élargie, comme représentée en 32, pour faciliter l'insertion de la fibre 70 dans cette rainure.

Plus précisément, comme cela apparaît à l'examen des figures 1 à 3, ladite rainure 30 est élargie d'une part en direction des faces latérales 13 et 14, d'autre part en direction de la face principale 12.

Par ailleurs, il est prévu dans la pièce support 10 un alésage borgne 40 (de section droite polygonale ou circulaire complémentaire de l'élément optique auxiliaire 80) débouchant sur la face principale 12, et prolongé vers l'intérieur de la pièce support 10 par un alésage 42 coaxial mais de plus faible section.

Le décrochement 43 délimité au niveau de la transition entre les deux alésages 40, 42 forme une surface d'appui en couronne dirigée généralement vers la face principale 12.

Sur la figure 1, on a référencé 41 l'axe des alésages 40, 42.

A l'utilisation, cet axe 41 coïncide avec l'axe optique 81 d'un premier élément optique auxiliaire 80 engagé dans les alésages 40, 42.

Comme représenté sur la figure 3, l'axe 41 des alésages 40, 42 est en général incliné en regard de la normale à la face principale 12. Le positionnement de cet axe 41 sera précisé par la suite.

Par ailleurs, on notera que le fond 44 de l'alésage 42 est de préférence plan et normal à l'axe 41 afin d'éviter une dispersion du faisceau le traversant.

La surface d'appui 43 précitée sert de butée pour le corps 82 de ce premier élément auxiliaire 80 et assure ainsi le positionnement précis de cet élément optique, comme représenté sur la figure 3. L'alésage 42 reçoit la lentille d'entrée/sortie 83.

Enfin, on notera la présence d'un évidement 50, sur la face principale 11, complémentaire d'une portion de l'enveloppe d'un second élément optique auxiliaire 90.

L'évidement 50 s'étend généralement parallèlement aux faces latérales 13, 14 et symétriquement par rapport à celles-ci. Plus précisément, l'évidement 50 s'étend à partir de la face latérale 16 en direction de la structure en relief 20 en étant interrompu à distance de celle-ci par une surface de base 51 parallèle aux faces latérales 15, 16.

Cette face de base 51 sert d'appui au corps 92 du second élément optique auxiliaire 90 afin de garantir un positionnement précis de ce dernier.

La profondeur de l'évidement 50 est déterminée de telle sorte que la lentille d'entrée/sortie 93 soit de préférence disposée au-dessus de la face principale 11 de la pièce support 10.

La position de l'évidement 50 par rapport à la structure en relief 20, position qui détermine le lieu géométrique de l'axe 91 sera explicitée par la suite.

Le cas échéant, les alésages 40, 42 peuvent être remplacés par un alésage de faible section, et/ou l'évidement 50 peut être remplacé par une rainure en « V » de faible section, pour recevoir des fibres optiques à la place des récepteurs optiques 80, 90 précités. Dans un tel cas, de préférence, ces alésage et rainure de faible section sont élargis (de façon homologue à l'élargissement 32 précité) à leur extrémité opposée à la structure en relief 20 afin de faciliter l'insertion de fibres optiques dans ceux-ci.

A l'utilisation, un élément optique principal, en l'occurrence une fibre optique 70 dont la face frontale 72 est perpendiculaire à l'axe optique 71 est insérée dans la rainure 30 et poussée en appui contre la face d'entrée 21 de la structure en relief 20. La position de la fibre optique 70 est ainsi définie de façon sûre et précise.

Par ailleurs, des éléments optiques auxiliaires 80 et 90 sont engagés dans les alésages 40 et 50 et poussés respectivement en appui contre les faces 43 et 51 précitées. La position de ces éléments est ainsi définie de façon sûre et précise.

L'homme de l'art comprendra aisément qu'un faisceau de lumière issu de la fibre optique principale 70 et traversant la face d'entrée 21 de la structure en relief, sera divisé, sur la face de sortie 22, selon l'angle d'incidence sur celle-ci, d'une part en une portion réfléchie sur cette face de sortie 22 et dirigée vers la face principale 12 et d'autre part en une fraction réfractée traversant la face de sortie 22.

La fraction réfléchie de ce faisceau doit être récupérée par le premier élément optique auxiliaire 80. La fraction réfractée de ce faisceau doit être récupérée par le second élément optique auxiliaire 90.

A cette fin, la géométrie et la position de l'alésage 40 dans la pièce support 10 sont bien entendu déterminées de telle sorte que l'axe optique 81 du premier élément optique auxiliaire 80 coïncide avec la direction moyenne de la fraction réfléchie d'un tel faisceau optique.

De façon similaire, la géométrie et la position de l'évidement 50 sur la pièce support 10 sont déterminées de telle sorte que l'axe optique 91 du second élément optique auxiliaire coïncide avec la direction moyenne de la fraction réfractée du faisceau lumineux précité.

La position des axes optiques (71, 81, 91) a été représentée schématiquement sur les figures 1 à 3.

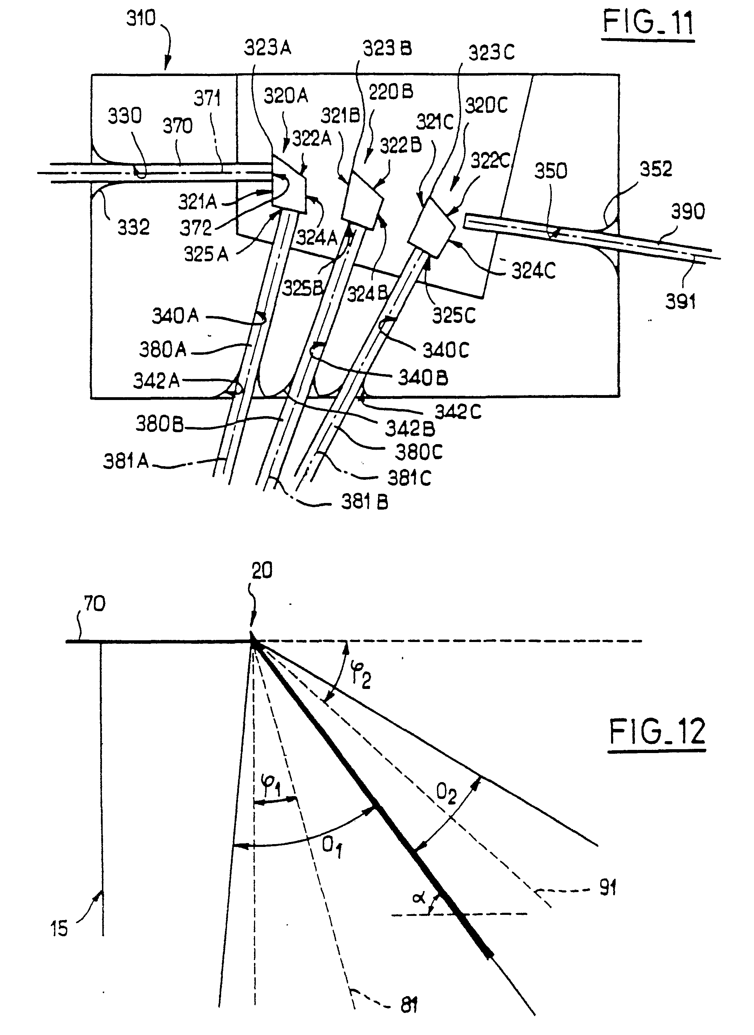

La position relative de ces axes optiques va maintenant être explicitée en regard de la figure 12.

Sur cette figure 12, on reconnaît les axes optiques 81 et 91, la structure en relief 20, la fibre optique 70 et le bord latéral 15 du support.

Par ailleurs, sur la figure 12, on a référencé $\alpha$ l'inclinaison de la surface de sortie 22 de la structure en relief par rapport à la normale à la face d'entrée 21, c'est-à-dire l'inclinaison entre la face de sortie 22 et l'axe optique 71 de la fibre optique principale 70.

Sur cette même figure 12, on a référencé $\varphi_1$ l'inclinaison de l'axe optique 81 du premier élément optique auxiliaire par rapport à la normale à l'axe optique 71 ; et $O_1$ l'ouverture du faisceau lumineux secondaire généré par réflexion sur la face de sortie 22 et dirigée vers le premier élément optique auxiliaire 80. On a également référencé $\varphi_2$ l'inclinaison de l'axe optique 91 du second élément optique auxiliaire par rapport à l'axe optique 71 de l'élément optique principal 70 ; et $O_2$ l'ouverture du faisceau secondaire dévié par réfraction lors de la traversée de la face de sortie 22 de la structure en relief 20 et dirigée vers le second élément.

La Demanderesse a déterminé que pour obtenir un rendement maximum, l'inclinaison $\varphi_1$ précitée devait répondre à la relation :

$$\varphi_1 = \frac{\operatorname{arc\,sin} \dfrac{\text{N.A.}}{n_m} + \pi - 3\,\alpha}{2} \tag{1}$$

dans laquelle :

$n_m$ représente l'indice du polymère constituant la pièce support 10, et

N.A. représente l'ouverture numérique de la fibre.

De même, la Demanderesse a déterminé que pour obtenir un rendement maximum, l'inclinaison $\varphi_2$ devait répondre à la relation :

$$\varphi_2 = \alpha + \frac{\operatorname{arc\,sin}\left\{ n_m \cdot \cos\left[ \alpha + \operatorname{arc\,sin}\left( \dfrac{\text{N.A.}}{n_m} \right) \right] \right\} - \dfrac{\pi}{2}}{2} \tag{2}$$

dans laquelle, les symboles $n_m$ et N.A. sont identiques à ceux utilisés dans la relation (1) précitée.

Par ailleurs, la Demanderesse a déterminé que les ouvertures $O_1$ et $O_2$ précitées des faisceaux lumineux secondaires respectivement réfléchi et réfracté répondaient aux relations :

$$O_1 = \alpha - \operatorname{arc\,sin} \frac{\text{N.A.}}{n_m} \tag{3}$$

$$O_2 = \frac{\pi}{2} - \operatorname{arc\,sin}\left\{ n_m \cdot \cos\left[ \alpha + \operatorname{arc\,sin}\left( \frac{\text{N.A.}}{n_m} \right) \right] \right\} \tag{4}$$

Enfin, la Demanderesse a déterminé que les angles limites d'inclinaison de la face de sortie 22 de la structure en relief 20 par rapport à l'axe optique 71 de l'élément optique auxiliaire devaient répondre aux relations :

$$\alpha_{max} = \frac{\pi}{2} + \arc\sin\left(\frac{N.A.}{n_m}\right) - \arc\sin\frac{1}{n_m} \qquad (5)$$

$$\alpha_{min} = \arc\cos\frac{1}{n_m} - \arc\sin\left(\frac{N.A.}{n_m}\right) \qquad (6)$$

Cela conduit dans la pratique pour des fibres à gradient d'indice classiques, à réaliser des pièces support 10 possédant une structure en relief 20 qui présentent une face de sortie dont l'inclinaison α en regard de l'axe optique 71 est comprise entre 54,3° et 38,5°, avec une pièce support en un polymère d'indice nm 1,45 et une ouverture numérique N.A. de la fibre optique égale à 0,2.

Les éléments optiques 70, 80 et 90 après avoir été portés en appui respectivement contre les surfaces 21, 43 et 51 sont de préférence collés sur le support 10, comme cela est illustré schématiquement en 60 sur la figure 3.

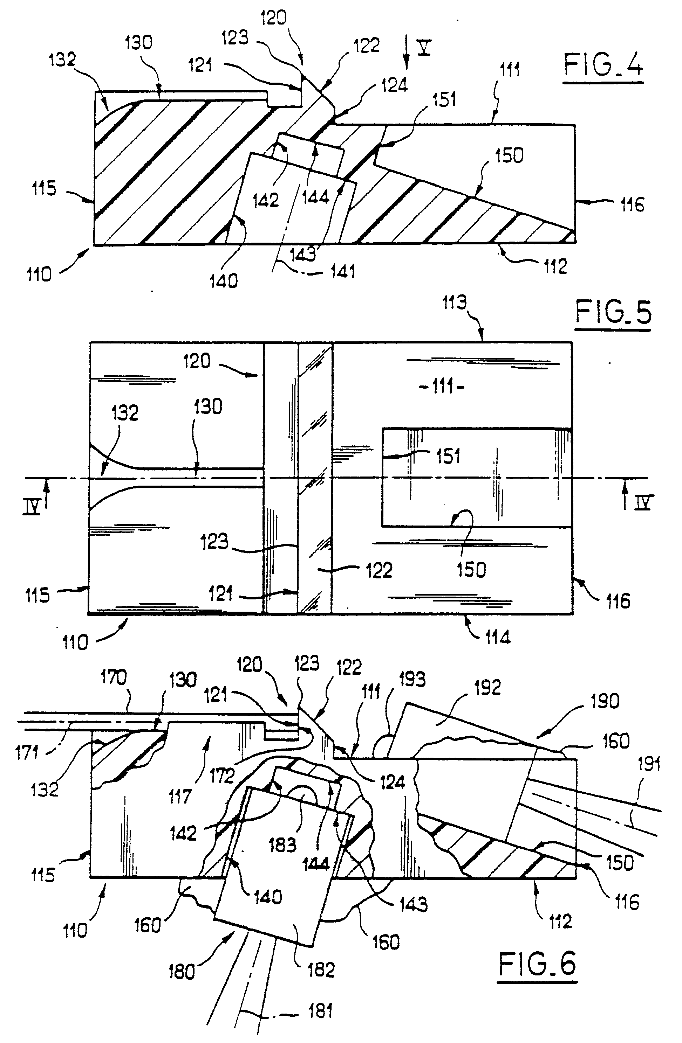

On va décrire maintenant le second mode de réalisation d'un coupleur optique conforme à la présente invention, représenté sur les figures 4 à 6.

Pour l'essentiel, ce second mode de réalisation ne diffère du premier décrit précédemment en regard des figures 1 à 3 que par la géométrie de la structure en relief formant diviseur optique et la position de l'alésage recevant le premier élément optique auxiliaire.

Pour ces raisons, la structure du coupleur optique conforme à ce second mode de réalisation représenté sur les figures 4 à 6 ne sera pas décrite en détail par la suite. Les éléments du coupleur optique conforme à ce second mode de réalisation porteront sur les figures 4 à 6 des références numériques incrémentées de 100 par rapport aux éléments homologues du premier mode de réalisation représenté sur les figures 1 à 3.

Selon ce second mode de réalisation, la structure en relief 120 prévue sur la pièce support 110 comprend une seconde face de sortie 124 adaptée pour récupérer et renvoyer par réflexion, vers le premier élément optique auxiliaire 180 logé dans l'alésage 140, la fraction réfléchie sur la première face de sortie 122 d'un faisceau lumineux traversant transversalement la face d'entrée 121. Les faces d'entrée 121 et de sortie 122, 124 sont planes de préférence.

Plus précisément, cette seconde face de sortie 124 est intercalée entre la première face de sortie 122 et la face principale 111.

La seconde face de sortie 124 s'étend de préférence sensiblement perpendiculairement à la face principale 111 (parallèlement à la face d'entrée 121).

La position des alésages 140, 142 recevant le premier élément optique auxiliaire 180 est modifiée en conséquence par rapport au premier mode de réalisation c'est-à-dire que l'axe 141 de ces alésages 140, 142 est maintenant symétrique, par rapport à la normale à la seconde face de sortie 124, à la direction moyenne d'incidence sur cette face de sortie 124 de la fraction du faisceau réfléchie sur la première face de sortie 122.

Comme cela apparaît à l'examen de la figure 4, l'angle d'inclinaison de l'axe 141 des alésages 140, 142 (qui coïncide avec l'axe optique 181 du premier élément optique 180, à l'utilisation), par rapport à l'axe optique 171 de l'élément optique principal 170 peut alors être aigu.

Comme cela ressort clairement d'une comparaison des figures 3 et 6 l'adjonction d'une seconde face de sortie 124 sur la structure en relief formant diviseur optique permet d'assurer une séparation nette des faisceaux optiques auxiliaires en augmentant l'inclinaison relative entre les directions moyennes des fractions réfractée et réfléchie du faisceau principal incident.

Cette disposition peut faciliter l'implantation des éléments optiques.

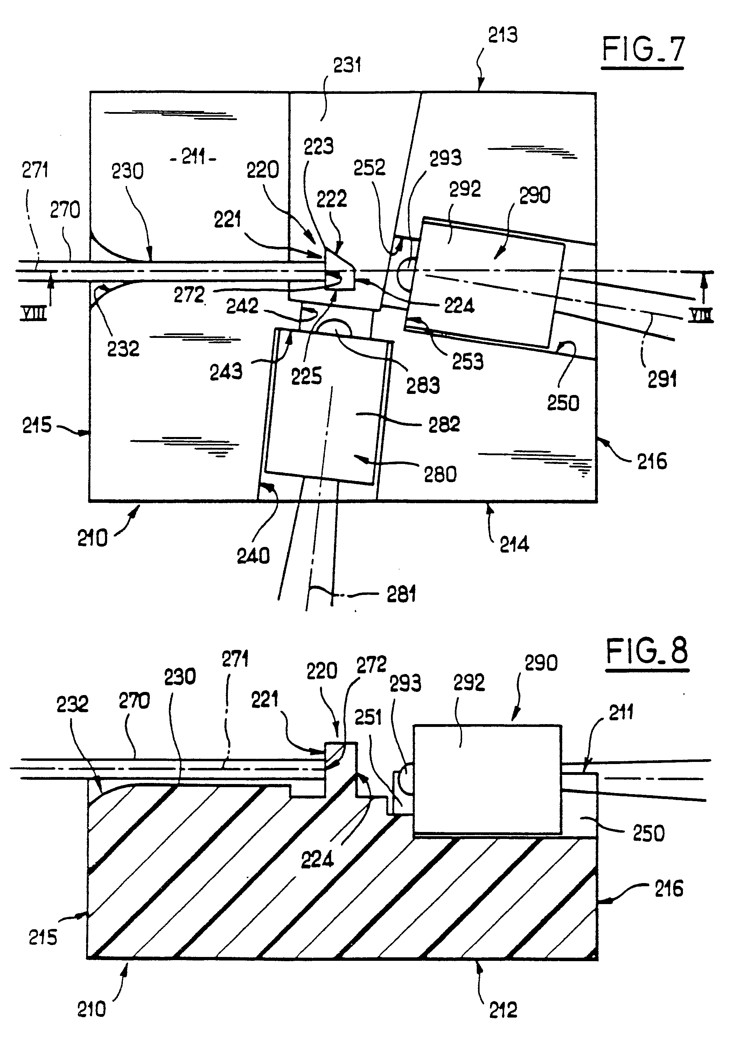

On va décrire maintenant le troisième mode de réalisation d'un coupleur optique conforme à la présente invention représenté sur les figures 7 à 9.

Pour simplifier la description, les éléments du coupleur optique conforme à ce troisième mode de réalisation porteront sur les figures 7 et 8 des références numériques incrémentées de 200 par rapport aux éléments homologues du premier mode de réalisation représenté sur les figures 1 à 3.

Là encore, le coupleur optique comprend une pièce support monobloc 210 apte à recevoir un élément optique principal 270 et deux éléments optiques auxiliaires 280, 290.

La pièce support monobloc 210, réalisée en un matériau transparent, est généralement parallélépipédique et délimitée par deux faces principales parallèles 211, 212 et quatre faces latérales 213, 214, 215 et 216 parallèles deux à deux et normales aux faces principales 211, 212.

Sur la face principale 211 sont prévues une structure en relief 220, et des rainures 230, 240, 250 recevant respectivement les éléments optiques 270, 280 et 290 comme représenté sur la figure 7.

La rainure 230 de section droite en « V » parallèle aux faces latérales 213, 214, débouche d'un côté sur la face latérale 215, de l'autre dans une cavité 231 entourant la structure en relief 220.

Cette dernière est formée d'un bloc en saillie sur la face principale 211 et délimitée par une face d'entrée 221, une première face de sortie 222, une seconde face de sortie 224 et une troisième face de sortie 225, toutes perpendiculaires à la face principale 211 et planes de préférence.

La face d'entrée 221 est normale à l'axe 271 de l'élément optique principal 270 afin d'éviter une dispersion du faisceau lumineux issu de celui-ci lors de la traversée de cette face d'entrée.

La première face de sortie 222 est inclinée en regard de la face d'entrée afin d'opérer une division d'un faisceau optique issu de l'élément optique principal 270 traversant celle-ci en une fraction déviée par réfraction qui traverse la première face de sortie et en une fraction réfléchie qui est renvoyée vers la seconde face de sortie 224.

Celle-ci est de préférence sensiblement parallèle à la face d'entrée 221. Plus précisément, l'orientation de la seconde face de sortie 224 est déterminée pour renvoyer par réflexion, dans la direction de l'axe optique 281 du premier élément optique auxiliaire 280, la fraction de faisceau qu'elle reçoit de la première face de sortie 222.

La troisième face de sortie 225 est normale à la direction moyenne du faisceau réfléchi par la seconde face de sortie 224 afin d'éviter une dispersion du faisceau lors de la traversée de cette troisième face de sortie 225.

Sur le plan fonctionnel, la face d'entrée 221 est comparable aux faces d'entrée 21, 121 précitées, les faces de sorties 222, 224 sont respectivement comparables aux faces de sortie 122, 124 précitées et la face de sortie 125 est comparable à la paroi 44, 144 extrême des alésages 40, 42 ou 140, 142.

L'évidement 240 destiné à recevoir le premier élément optique auxiliaire 280 s'étend à partir de la face latérale 214 en direction de la troisième face de sortie 225. Plus précisément, cet évidement 240 est interrompu à distance de la structure en relief 220 et débouche dans un évidement 242 qui lui est symétrique et communique avec la cavité précitée 231 entourant la structure en relief 220.

Le décrochement 243 délimité au niveau de la transition entre les évidements 240 et 242 précités forme une surface d'appui en couronne dirigée généralement vers la face latérale 214.

Cette surface d'appui 243 sert de butée pour le corps 282 du premier élément optique auxiliaire 280 et assure ainsi un positionnement précis de cet élément optique.

L'évidement 242 reçoit la lentille d'entrée/sortie 283.

L'évidement 250 destiné à recevoir le second élément optique auxiliaire 290 s'étend à partir de la face latérale 216 en direction de la face de sortie 222. Plus précisément, cet évidement 250 est interrompu à distance de la structure en relief 220 et débouche dans un évidement 252 qui lui est symétrique et communique avec la cavité 231 entourant la structure en relief 220.

Le décrochement 253 délimité au niveau de la transition entre les évidements précités 250 et 252 forme une surface d'appui en couronne dirigée généralement vers la face latérale 216.

Cette surface d'appui 253 sert de butée pour le corps 292 du second élément optique auxiliaire 290 et assure ainsi un positionnement précis de cet élément optique.

L'évidement 252 reçoit la lentille d'entrée/sortie 293.

L'inclinaison relative des axes optiques 271, 281 et 291 est identique à celle définie pour les axes 171, 181 et 191 en regard des figures 4 à 6.

On va maintenant décrire succinctement le quatrième mode de réalisation d'un coupleur optique conforme à la présente invention représenté sur la figure 11.

Ce quatrième mode de réalisation, pour l'essentiel, ne diffère du mode de réalisation précédemment décrit en regard des figures 7 et 8 que par la disposition des moyens formant diviseurs optiques.

Ce quatrième mode de réalisation ne sera donc pas décrit en détail.

Pour simplifier la description, les éléments du coupleur optique conforme à ce quatrième mode de réalisation porteront sur la figure 11 des références numériques incrémentées de 100 par rapport aux éléments homologues du troisième mode de réalisation représenté sur les figures 7 et 8 (soit des références numériques incrémentées de 300 par rapport aux éléments homologues du premier mode de réalisation représenté sur les figures 1 à 3).

Selon ce quatrième mode de réalisation, la pièce support 310 est munie de plusieurs structures en relief 320A, 320B, 320C, formant chacune diviseur optique. Ces structures 320A, 320B, 320C sont disposées en cascade afin de récupérer chacune une fraction réfléchie ou réfractée du faisceau lumineux issu d'une structure disposée en amont sur le chemin optique.

Selon le mode de réalisation représenté sur la figure 11, trois structures en cascade sont prévues. Cette disposition particulière n'est cependant aucunement limitative. Chaque structure 320A, 320B, 320C comprend une face d'entrée 321A, 321B, 321C, une première face de sortie 322A, 322B, 322C, une seconde face de sortie 324A, 324B, 324C et une troisième face de sortie 325A, 325B, 325C, toutes perpendiculaires à la face principale 311 de la pièce support 310, et respectivement équivalentes aux faces d'entrée 221, première face de sortie 222, seconde face de sortie 224 et troisième face de sortie 225 précitées.

La face d'entrée 321A d'une première structure 320A s'étend transversalement à une rainure 330 logeant une fibre optique principale 370 pour recevoir un faisceau incident de celle-ci.

Une fraction de ce faisceau, réfléchie sur la première face de sortie 322A, est dirigée vers la seconde face de sortie 324A qui renvoie cette fraction, après traversée de la troisième face de sortie 325A vers une fibre optique auxiliaire 380A logée dans une rainure 340A.

La fraction réfractée du faisceau incident traversant la face de sortie précitée 322A est dirigée vers la face d'entrée 321B de la seconde structure 320B et traverse cette face d'entrée pour parvenir sur la première face de sortie 322B.

La fraction du faisceau réfléchie sur la première face de sortie 322B est dirigée vers la seconde face de sortie 324B qui renvoie cette fraction, après traversée de la troisième face de sortie 325B vers une autre fibre optique auxiliaire 380B logée dans une rainure 340B.

La fraction réfractée du faisceau traversant la face de sortie précitée 322B est dirigée vers la face d'entrée 321C de la troisième structure 320C et traverse cette face d'entrée pour parvenir sur la première face de sortie 322C.

La fraction du faisceau réfléchie sur la première face de sortie 322C est dirigée vers la seconde face de sortie 324C qui renvoie cette fraction, après traversée de la troisième face de sortie 325C vers une autre fibre optique auxiliaire 380C logée dans une rainure 340C.

La fraction réfractée du faisceau traversant la face de sortie précitée 322C est dirigée vers une autre fibre optique auxiliaire 390 logée dans une rainure 350.

On remarquera que de façon avantageuse l'extrémité frontale des fibres 380A, 380B et 380C repose respectivement contre les troisièmes faces de sortie 325A, 325B et 325C des structures en relief.

Les inclinaisons relatives des faces des structures en relief 320A, 320B et 320C, ainsi que des axes optiques 371, 381A, 381B, 381C et 391 sont déterminées sur la base des relations (1) à (6) précitées.

L'homme de l'art comprendra aisément qu'un grand nombre de dispositions des structures en relief formant diviseur optique sont envisageables selon l'invention.

A titre d'exemple, le faisceau réfléchi issu de chacune des structures en relief 320A, 320B, 320C, peut lui-même être divisé à l'aide d'au moins une structure en relief formant diviseur optique disposé en aval sur le chemin optique, et supporté par la face principale 311 de la pièce support 310.

Cette dernière étant réalisable par moulage d'une matière polymère transparente une telle multiplication des structures en relief ne grève nullement le prix de revient des coupleurs. On obtient ainsi des coupleurs optiques multivoies, robustes, économiques, fiables, simples d'emploi et dont la géométrie peut aisément être adaptée à chaque application particulière.

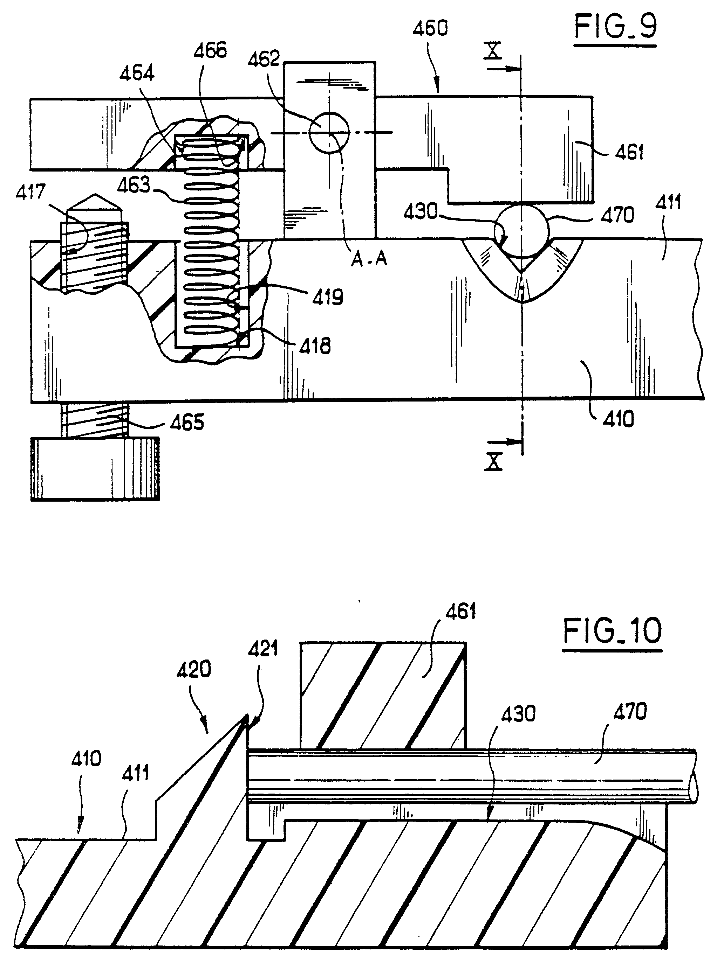

On a représenté sur les figures 9 et 10 une pince élastique 460 permettant d'immobiliser une fibre optique 470 dans une rainure 430.

Une telle fibre 470 peut constituer un élément optique principal disposé en regard de la face d'entrée 421 d'une structure en relief 420 ou tout autre élément optique auxiliaire.

La pince 460 comprend un levier 461 monté à pivotement autour d'un axe A-A parallèle à la face principale 411 d'une pièce support 410 grâce à un tourillon 462 engagé d'une part dans une chape 418 solidaire de la face principale 411 précitée, d'autre part dans le corps du levier.

Le levier 461 est sollicité élastiquement vers la surface 411 par un ressort 463.

Plus précisément, le ressort 463 à compression prend appui d'une part contre le fond 418 d'un alésage borgne 419 ménagé dans le corps 410 et débouchant sur la face principale 411, d'autre part contre le fond 466 d'un alésage borgne 464 ménagé dans le levier 461, à l'opposé de la tête de celui-ci destinée à reposer contre la fibre optique 470, par rapport à l'axe de pivotement A-A.

Une tige filetée 465 engagée dans un alésage taraudé 417 traversant la pièce support 410 et s'étendant perpendiculairement à la pièce support 410 en regard de l'extrémité du levier 461 sollicitée par ressort permet, après déplacement commandé, de bloquer le levier 460 en position de serrage lorsque l'extrémité de la tige filetée 465 vient en appui contre le levier 461.

Dans cette position, le levier 461 interdit le retrait de la fibre optique 470.

Toutefois, s'il s'avère nécessaire de libérer ultérieurement la fibre 470, le levier peut être à nouveau pivoté à l'encontre de l'action du ressort 463, après retrait de la tige filetée 465.

La tige filetée peut être utilisée en variante pour limiter le pivotement du levier 461 afin d'interdire le retrait de la fibre optique 470 hors de la rainure 430, transversalement à la direction longitudinale de celle-ci. Pour cela il n'est plus nécessaire de porter la tige filetée 465 en appui contre le levier 461.

Un tel moyen de blocage amovible peut avantageusement remplacer l'utilisation précitée de colle, pour fixer les éléments optiques sur la pièce support.

Une telle pince élastique autorise en effet un démontage plus aisé du coupleur.

## Revendications

1. Coupleur optique adapté pour assurer un couplage optique entre un élément optique principal (70 ; 170 ; 270 ; 370) et au moins deux éléments optiques auxiliaires (80, 90 ; 180, 190 ; 280, 290 ; 380A, 380B, 380C, 390), caractérisé par le fait qu'il comprend un support monobloc (10 ; 110 ; 210 ; 310), en matériau transparent, possédant :

— au moins une structure à effet de prisme optique (20 ; 120 ; 220 ; 320A, 320B, 320C) en relief par rapport à une face principale du support, formant diviseur optique, qui présente au moins une face d'entrée (21 ; 121 ; 221 ; 321A, 321B ; 321C) et une première face de sortie (22 ; 122 ; 222 ; 322A, 322B, 322C) inclinée en regard de la face d'entrée,

— un moyen de positionnement principal (30 ; 130 ; 230, 330) en relief par rapport à la face principale du support et, apte à recevoir l'élément optique principal en regard de la face d'entrée d'une structure à effet de prisme optique associée et dans une position telle que l'axe optique (71, 171 ; 271, 371) de cet élément soit généralement transversal à cette face d'entrée,

— un premier moyen de positionnement auxiliaire (40 ; 140, 240 ; 340A, 340B, 340C), sur le support, apte à recevoir un premier élément optique auxiliaire (80, 180 ; 280 ; 380A, 380B, 380C) dans une position telle que celui-ci récupère la fraction réfléchie sur la face de sortie (22 ; 122 ; 222 ; 322A, 322B, 322C) d'une structure associée à effet de prisme optique, d'un faisceau lumineux issu de l'élément optique principal et traversant la face d'entrée,

— un second moyen de positionnement auxiliaire (50 ; 150 ; 250 ; 350), en relief sur le support, apte à recevoir un second élément optique auxiliaire (90, 190 ; 290 ; 390) dans une position telle que celui-ci récupère la fraction réfractée du faisceau lumineux traversant la face de sortie (22 ; 122 ; 222 ; 322A, 322B, 322C) d'une structure associée à effet de prisme optique (20, 120 ; 220 ; 320A, 320B, 320C).

2. Coupleur optique selon la revendication 1, caractérisé par le fait que la structure en relief (120 ; 220 ; 320A, 320B, 320C) à effet de prisme optique, formant diviseur optique comprend une seconde face de sortie (124 ; 224 ; 324A, 324B, 324C) apte à récupérer et renvoyer par réflexion vers un élément optique auxiliaire (180 ; 280 ; 380A, 380B, 380C) la fraction réfléchie sur la première face de sortie (122 ; 222, 322A, 322B, 322C) d'un faisceau lumineux traversant transversalement la face d'entrée (121 ; 221 ; 321A, 321B, 321C).

3. Coupleur optique selon l'une des revendications 1 ou 2, caractérisé par le fait que la face d'entrée (21 ; 121 ; 221 ; 321A, 321B, 321C) de la structure en relief à effet de prisme optique, formant diviseur optique, est plane.

4. Coupleur optique selon l'une des revendications 1 à 3, caractérisé par le fait que les axes optiques (71, 81, 91 ; 171, 181, 191 ; 271, 281, 291 ; 371, 381A, 381B, 381C, 391) des éléments optiques sont coplanaires.

5. Coupleur optique selon l'une des revendications 1 à 4, caractérisé par le fait que le moyen de positionnement principal (30, 130) et le second moyen de positionnement auxiliaire (50, 150) sont disposés sur une même face principale (11, 111) du support, le premier moyen de positionnement auxiliaire (40, 140) étant ménagé dans le corps du support (10, 110) de telle sorte que l'axe optique (81, 181) du premier élément optique auxiliaire (80, 180) soit généralement transversal à ladite face principale (11, 111) du support.

6. Coupleur optique selon la revendication 5, caractérisé par le fait que la face d'entrée (21 ; 121) de la structure en relief à effet de prisme optique (20 ; 120), formant diviseur optique, est généralement perpendiculaire à la face principale (11 ; 111) du support et la ligne d'intersection (23 ; 123) de la face d'entrée (21 ; 121) et de la première face de sortie (22 ; 122) est sensiblement parallèle à cette face principale.

7. Coupleur optique selon l'une des revendications 1 à 4, caractérisé par le fait que tous les moyens de positionnement (230, 240, 250 ; 330, 340A, 340B, 340C, 350) sont disposés sur la face principale du support (210 ; 310), les axes optiques (271, 281, 291 ; 371, 381A, 381B, 381C, 391) des éléments optiques étant parallèles à celle-ci.

8. Coupleur optique selon la revendication 7, caractérisé par le fait que la face d'entrée (221 ; 321A, 321B, 321C) et la première face de sortie (222 ; 322A, 322B, 322C) de la structure en relief à effet de prisme, ainsi que la ligne d'intersection (223 ; 323A, 323B, 323C) de ces faces sont sensiblement perpendiculaires à ladite face principale.

9. Coupleur optique selon l'une des revendications 1 à 8, formant en particulier coupleur multivoies, caractérisé par le fait que le support monobloc (310) possède plusieurs structures en relief à effet de prisme (320A, 320B, 320C) disposées en cascade afin de récupérer chacune une fraction réfléchie ou réfractée du faisceau lumineux issu d'une structure disposée en amont sur le chemin optique.

10. Coupleur optique selon la revendication 9, caractérisé par le fait qu'il comprend une pluralité de moyens de positionnement auxiliaires (340A, 340B, 340C) adaptés pour recevoir chacun un élément optique (380A, 380B, 380C) apte à récupérer une fraction de faisceau issu d'une structure en relief à effet de prisme optique associée (320A, 320B, 320C).

11. Coupleur optique selon l'une des revendications 1 à 10, carractérisé par le fait que l'élément optique principal (70 ; 170 ; 270 ; 370) est une fibre optique.

12. Coupleur optique selon l'une des revendications 1 à 11, caractérisé par le fait que la face d'entrée (21 ; 121 ; 221 ; 321) de la structure en relief (20 ; 120 ; 220 ; 320) à effet de prisme optique sert d'appui à l'élément optique principal (70 ; 170 ; 270 ; 370).

13. Coupleur optique selon l'une des revendications 1 à 12, caractérisé par le fait que au moins l'un des éléments optiques auxiliaires comprend une fibre optique (380A, 380B, 380C, 390).

14. Coupleur optique selon l'une des revendications 1 à 13, caractérisé par le fait que au moins l'un des éléments optiques (80, 90 ; 180, 190 ; 280, 290) comprend un élément émetteur ou récepteur optique.

15. Coupleur optique selon l'une des revendications 1 à 14, prise en combinaison avec l'une des revendications 11 ou 13, caractérisé par le fait que la face frontale (72, 172, 272, 372) des fibres optiques est généralement perpendiculaire à l'axe longitudinal (71 ; 171 ; 271 ; 371) de celles-ci.

16. Coupleur optique selon l'une des revendications 1 à 15, caractérisé par le fait que les moyens de positionnement (30, 40, 50 ; 130, 140, 150 ; 230, 240, 250 ; 330, 340A, 340B, 340C, 350) comprennent un évidement complémentaire d'une portion au moins de l'enveloppe extérieure des éléments optiques.

17. Coupleur optique selon la revendication 16, caractérisé par le fait que certains au moins des évidements sont formés de rainures (30 ; 130 ; 230 ; 330, 340A, 340B, 340C, 350) possédant une section droite en « V », pour la réception d'une fibre optique.

18. Coupleur optique selon la revendication 17, caractérisé par le fait que l'extrémité des rainures

EP 0 178 203 B1

(30 ; 130, 230 ; 330 ; 340A, 340B, 340C, 350) éloignée de la structure en dépouille (20 ; 120, 220, 320) est élargie (32 ; 132 ; 232 ; 342A, 342B, 342C, 352) pour faciliter l'engagement des fibres optiques.

19. Coupleur optique selon l'une des revendications 1 à 18, caractérisé par le fait que les éléments optiques (70, 80, 90) sont collés sur le support.

20. Coupleur optique selon l'une des revendications 1 à 18, caractérisé par le fait que les éléments optiques (470) sont immobilisés sur les moyens de positionnement (430) à l'aide de pinces élastiques (460).

21. Coupleur optique selon la revendication 20, caractérisé par le fait que chaque pince élastique (460) comprend un levier (461) monté pivotant sur le support (410) et rappelé par ressort (463) vers celui-ci.

22. Coupleur optique selon l'une des revendications 1 à 21, dans lequel l'élément optique principal est une fibre optique, caractérisé par le fait que l'inclinaison relative $\alpha$ de la première face de sortie (22 ; 122 ; 222) de la structure en relief à effet de prisme optique (20 ; 120 ; 220) par rapport à la normale à la face d'entrée (21 ; 121 ; 221) est comprise entre les valeurs $\alpha_{max}$ et $\alpha_{min}$ définies par les relations

$$\alpha_{max} = \frac{\pi}{2} + \text{arc sin} \left( \frac{N.A.}{n_m} \right) - \text{arc sin} \frac{1}{n_m} \quad \text{et}$$

$$\alpha_{min} = \text{arc cos} \frac{1}{n_m} - \text{arc sin} \left( \frac{N.A.}{n_m} \right)$$

dans lesquelles
$n_m$ représente l'indice du matériau formant le support, et
N.A. représente l'ouverture numérique de la fibre.

23. Coupleur optique selon la revendication 22, caractérisé par le fait que l'inclinaison relative $\alpha$ de la première face de sortie (22 ; 122 ; 322) de la structure en relief à effet de prisme optique par rapport à la normale à la face d'entrée (21 ; 121 ; 221) est comprise entre 54,3° et 38,5°.

## Claims

1. An optical coupler for providing an optical coupling between a main optical element (70 ; 170 ; 270 ; 370) and at least two auxiliary optical elements (80, 90 ; 180, 190 ; 280, 290 ; 380A, 380B, 380C, 390), characterised in that it comprises :
— An integral transparent support (10 ; 110 ; 210 ; 310) having at least one structure (20) having the effect of an optical prism (20 ; 120 ; 220 ; 320A, 320B, 320C), such structure being in relief relatively to a main surface of the support and forming an optical divider having at least one entry surface (21 ; 121 ; 221 ; 321A, 321B ; 321C) and a first inclined exit surface (22 ; 122 ; 222 ; 322A, 322B, 322C) opposite the entry surface ;
— Main positioning means (30 ; 130 ; 230 ; 330) which are in relief relatively to the main surface of the support and which are adapted to receive the main optical element facing the entry surface of an associated structure having the effect of an optical prism and in a position such that the optical axis (71, 171 ; 271, 371) of the latter element is generally transverse to such entry surface ;
— First auxiliary positioning means (40 ; 140, 240 ; 340A, 340B, 340C) on the support and adapted to receive a first auxiliary optical element (80, 180 ; 280, 380A, 380B, 380C) in a position such as to recover the fraction reflected by the exit surface (22 ; 122 ; 222 ; 322A, 322B, 322C) of an associated structure having an optical prism effect of a light beam issuing from the main optical element and passing through the entry surface ; and
— Second auxiliary positioning means (50 ; 150 ; 250, 350) which are disposed in relief on the support and which are adapted to receive a second auxiliary optical element (90, 190 ; 290 ; 390) in a position such that the latter element recovers that refractive fraction of the light beam which passes through the exit surface (22 ; 122 ; 222 ; 322A, 322B, 322C) of an associated structure having an optical prism effect (20, 120 ; 220 ; 320A, 320B, 320C).

2. An optical coupler according to claim 1, characterised in that the optical prism effect relief structure (120 ; 220 ; 320A, 320B ; 320C) forming an optical divider comprises a second exit surface (124 ; 224 ; 324A, 324B ; 324C) adapted to recuperate and reflect to an auxiliary optical element (180 ; 280 ; 380A, 380B, 380C) the fraction reflected on the first exist surface (122 ; 222, 322A, 322B, 322C) of a light beam passing transversely through the entry surface (121 ; 221 ; 321A, 321B, 321C).

3. An optical coupler according to claim 1 or 2, characterised in that the entry surface (21 ; 121 ; 221 ; 321A, 321B, 321C) of the relief structure having an optical prism effect and forming an optical divider is plane.

4. An optical coupler according to any of claims 1-3, characterised in that the optical axes (71, 81, 91 ; 171, 181, 191 ; 271, 281, 291 ; 371, 381A, 381B, 381C, 391) of the optical elements are coplanar.

5. An optical coupler according to any of claims 1-4, characterised in that the main positioning means (30, 130) and the second auxiliary positioning means (50, 150) are disposed on the same main surface (11, 111) of the support, the first auxiliary positioning means (40, 140) being so contrived in the body of the support (10, 110) that the optical axis (81, 181) of the first auxiliary optical element (80, 180) is substantially transverse to the main surface (11, 111) of the support.

6. An optical coupler according to claim 5, characterised in that the entry surface (21 ; 121) of the optical prism effect relief surface (20 ; 120) forming an optical divider is substantially perpendicular to the main surface (11 ; 111) of the support and the line (23 ; 123) intersecting the entry surface (21 ; 121) and the first exit surface (22 ; 122) is substantially parallel to the main surface (11 ; 111).

7. An optical coupler according to any of claims 1-4, characterised in that all the positioning means (230, 240, 250 ; 330, 340A, 340B, 340C, 350) are disposed on the main surface of the support (210 ; 310), the optical axes (271, 281, 291 ; 371, 381A, 381B, 381C, 391) of the optical elements being parallel to the last-mentioned surface.

8. An optical coupler according to claim 7, characterised in that the entry surface (221, 321A, 321B, 321C) and the first exit surface (222 ; 322A, 322B, 322C) of the prism effect relief structure and the line (223 ; 323A, 323B, 323C) intersecting the latter surfaces are substantially perpendicular to the main surface.

9. An optical coupler according to any of claims 1-8 and forming more particularly a multichannel coupler, characterised in that the integral support (310) has a number of cascaded prism effect relief structures (320A, 320B, 320C) in order for each to recover a reflected or refracted of the light beam emanating from a structure disposed upstream on the optical path.

10. An optical coupler according to claim 9, characterised in that it comprises a number of auxiliary positioning means (340A, 340B, 340C) each adapted to receive an optical element (380A, 380B, 380C) adapted to recover a beam fraction issuing from an optical prism effect relief structure (320A, 320B, 320C).

11. An optical coupler according to any of claims 1-10, characterised in that the main optical element (70 ; 170, 270, 370) is an optical fibre.

12. An optical coupler according to any of claims 1-11, characterised in that the entry surface (21 ; 121 ; 221 ; 321) of the optical prism effect relief structure (20 ; 120, 220 ; 320) is effective as a support for the main optical element (70 ; 170 ; 270 ; 370).

13. An optical coupler according to any of claims 1-12, characterised in that at least one of the auxiliary optical elements comprises an optical fibre (380A, 380B, 380C, 390).

14. An optical coupler according to any of claims 1-13, characterised in that at least one of the optical elements (80, 90 ; 180, 190 ; 280, 290) comprises an optical emitting or receiving element.

15. An optical coupler according to any of claims 1-14 taken in combination with either of claims 11 or 13, characterised in that the front surface (72, 172, 272, 372) of the optical fibres is substantially perpendicular to longitudinal axis (71 ; 171 ; 271 ; 371) thereof.

16. An optical coupler according to any of claims 1-15, characterised in that the positioning means (30, 40, 50 ; 130, 140, 150 ; 230, 240, 250 ; 330, 340A, 340B, 340C, 350) are formed with a recess matching at least a part of the outer envelope of the optical elements.

17. An optical coupler according to claim 16, characterised in that at least some of the recesses are in the form of grooves (30 ; 130 ; 230 ; 330, 340A, 340B, 340C, 350) having a V-shaped cross-section to receive an optical fibre.

18. An optical coupler according to claim 17, characterised in that the end of the grooves (30 ; 130, 230 ; 330 ; 340A, 340B, 340C, 350) which is remote from the recessed structure (20 ; 120, 220, 320) is widened (32 ; 132 ; 232 ; 342A, 342B, 342C, 352) to facilitate the engagement of the optical fibres.

19. An optical coupler according to any of claims 1-18, characterised in that the optical elements (70, 80, 90) are stuck to the support.

20. An optical coupler according to any of claims 1-18, characterised in that the optical elements (470) are rigidly secured to the positioning means (430) by means of resilient clamps (460).

21. An optical coupler according to claim 20, characterised in that each resilient clamp (460) comprises a lever (461) pivotally mounted on the support (41) and returned theretowards by a spring (463).

22. An optical coupler according to any of claims 1-21 in which the main optical element is an optical fibre, characterised in that the inclination $\alpha$ of the first exit surface (22 ; 122, 222) of the optical prism effect relief structure (20 ; 120, 220) relatively to the perpendicular to the entry surface (21 ; 121 ; 221) is between the values $\alpha_{max}$ and $\alpha_{min}$ defined by the relationships

$$\alpha_{max} = \frac{\pi}{2} + \text{arc sin}\left(\frac{\text{N.A.}}{n_m}\right) - \text{arc sin}\frac{1}{n_m} \quad \text{and}$$

$$\alpha_{min} = \text{arc cos}\frac{1}{n_m} - \text{arc sin}\left(\frac{\text{N.A.}}{n_m}\right)$$

wherein

$n_m$ represents the index of the material used for the support, and

N.A. represents the numerical opening of the fibre.

23. An optical coupler according to claim 22, characterised in that the inclination of the first exit surface (22 ; 122 ; 322) of the optical prism effect relief structure relatively to the perpendicular to the entry surface (21 ; 121, 221) is between 54.3° and 38.5°.

**Patentansprüche**

1. Optischer Verbinder, welcher in der Lage ist, eine optische Verbindung zwischen einem optischen Hauptelement (70 ; 170 ; 270 ; 370) und mindestens zwei optischen Hilfselementen (80, 90 ; 180, 190 ; 280, 290 ; 380A, 380B, 380C, 390) herzustellen, dadurch gekennzeichnet, daß er einen einstückigen Träger (10 ; 110 ; 210 ; 310) aus transparentem Material umfaßt, welcher besitzt :
— mindestens eine bezüglich einer Hauptoberfläche des Trägers hervortretende Struktur mit optischem Prismaeffekt (20 ; 120 ; 220 ; 320A, 320B, 320C), welche einen optischen Teiler bildet und welche mindestens eine Eintrittsfläche (21 ; 121 ; 221 ; 321A, 321B, 321C) und eine erste, gegenüber der Eintrittsfläche geneigte Austrittsfläche (22 ; 122 ; 222 ; 322A, 322B, 322C) aufweist,
— eine bezüglich der Hauptoberfläche des Trägers vorstehende Hauptpositioniereinrichtung (30 ; 130 ; 230 ; 330), welche in der Lage ist, das optische Hauptelement bezüglich der Eintrittsfläche einer zugehörigen Struktur mit optischem Prismaeffekt und in einer derartigen Position aufzunehmen, daß die optische Achse (71 ; 171 ; 271 ; 371) dieses Elementes allgemein quer zu dieser Eintrittsfläche liegt,
— eine erste Hilfspositioniereinrichtung (40 ; 140 ; 240 ; 340A, 340B, 340C) auf dem Träger, welche in der Lage ist, ein erstes optisches Hilfselement (80 ; 180 ; 280 ; 380A, 380B, 380C) in einer derartigen Position aufzunehmen, daß dieses den an der Austrittsfläche (22 ; 122 ; 222 ; 322A ; 322B, 322C) einer zugehörigen Struktur mit optischem Prismaeffekt reflektierten Anteil eines Lichtbündels empfängt, welches von dem optischen Hauptelement abgegeben wird und durch die Eintrittsfläche tritt,
— eine auf dem Träger vorstehende zweite Hilfspositioniereinrichtung (50 ; 150 ; 250 ; 350), welche in der Lage ist, ein zweites optisches Hilfselement (90 ; 190 ; 290 ; 390) in einer derartigen Position aufzunehmen, daß es den gebrochenen Anteil des Lichtbündels empfängt, welcher die Austrittsfläche (22 ; 122 ; 222 ; 322A, 322B, 322C) einer zugehörigen Struktur mit optischem Prismaeffekt (20 ; 120 ; 220 ; 320A, 320B, 320C) durchdringt.

2. Optischer Verbinder nach Anspruch 1, dadurch gekennzeichnet, daß die vorstehende Struktur (120 ; 220 ; 320A, 320B, 320C) mit optischem Prismaeffekt, welche einen optischen Teiler bildet, eine zweite Austrittsfläche (124 ; 224 ; 324A, 324B, 324C) besitzt, welche in der Lage ist, den an der ersten Austrittsfläche (122 ; 222 ; 322A, 322B, 322C) reflektierten Anteil eines quer durch die Eintrittsfläche (121 ; 221 ; 321A, 321B, 321C) tretenden Lichtbündels zu empfangen und durch Reflexion auf ein optisches Hilfselement (180 ; 280 ; 380A, 380B, 380C) zurückzuwerfen.

3. Optischer Verbinder nach einem der Ansprüche 1 oder 2, dadurch gekennzeichnet, daß die Eintrittsfläche (21 ; 121 ; 221 ; 321A, 321B, 321C) der vorstehenden Struktur mit optischem Prismaeffekt, welche den optischen Teiler bildet, eben ist.

4. Optischer Verbinder nach einem der Ansprüche 1 bis 3, dadurch gekennzeichnet, daß die optischen Achsen (71, 81, 91 ; 171, 181, 191 ; 271, 281, 291 ; 371, 381A, 381B, 381C, 391) der optischen Elemente koplanar sind.

5. Optischer Verbinder nach einem der Ansprüche 1 bis 4, dadurch gekennzeichnet, daß die Hauptpositioniereinrichtung (30 ; 130) und die zweite Hilfspositioniereinrichtung (50, 150) auf einer gemeinsamen Hauptoberfläche (11, 111) des Trägers angeordnet sind, wobei die erste Hilfspositioniereinrichtung (40, 140) in dem Trägerkörper (10, 110) derart angeordnet ist, daß die optische Achse (81, 181) des ersten optischen Hilfselementes (80, 180) allgemein quer zu der Hauptoberfläche (11, 111) des Trägers verläuft.

6. Optischer Verbinder nach Anspruch 5, dadurch gekennzeichnet, daß die Eintrittsfläche (21 ; 121) der vorstehenden Struktur mit optischem Prismaeffekt (20 ; 120), welche den optischen Teiler bildet, allgemein senkrecht zu der Hauptoberfläche (11 ; 111) des Trägers steht und daß die Schnittlinie (23 ; 123) zwischen der Eintrittsfläche (21 ; 121) und der ersten Austrittsfläche (22 ; 122) annähernd parallel zu dieser Hauptoberfläche liegt.

7. Optischer Verbinder nach einem der Ansprüche 1 bis 4, dadurch gekennzeichnet, daß alle Positioniereinrichtungen (230, 240, 250 ; 330, 340A, 340B, 340C, 350) auf der Hauptoberfläche des Trägers (210 ; 310) angeordnet sind, wobei die optischen Achsen (271, 281, 291 ; 371, 381A, 381B, 381C, 391) der optischen Elemente dazu parallel liegen.

8. Optischer Verbinder nach Anspruch 7, dadurch gekennzeichnet, daß die Eintrittsfläche (221 ; 321A, 321B, 321C) und die erste Austrittsfläche (222 ; 322A, 322B, 322C) der vorspringenden Struktur mit optischem Prismaeffekt sowie die Schnittlinie (223 ; 323A, 323B, 323C) dieser Flächen annähernd senkrecht zu der Hauptoberfläche stehen.

9. Optischer Verbinder nach einem der Ansprüche 1 bis 8, welcher insbesondere einen Mehrfachverbinder bildet, dadurch gekennzeichnet, daß der einstückige Träger (310) mehrere vortretende Strukturen mit optischem Prismaeffekt (320A, 320B, 320C) besitzt, welche in Kaskadenform angeordnet sind, so daß eine jede einen reflektierten oder gebrochenen Anteil des Lichtbündels empfängt, welches von einer vorher auf dem optischen Weg angeordneten Struktur abgegeben wird.

10. Optischer Verbinder nach Anspruch 9, dadurch gekennzeichnet, daß er eine Mehrzahl von Hilfspositioniereinrichtungen (340A, 340B, 340C) besitzt, von denen jede geeignet ist, ein optisches Element (380A, 380B, 380C) aufzunehmen, welches in der Lage ist, einen Anteil des Bündels zu empfangen, welches von einer zugehörigen vorstehenden Struktur mit optischem Prismaeffekt (320A, 320B, 320C) abgegeben wird.

11. Optischer Verbinder nach einem der Ansprüche 1 bis 10, dadurch gekennzeichnet, daß das optische Hauptelement (70 ; 170 ; 270 ; 370) eine optische Faser ist.

12. Optischer Verbinder nach einem der Ansprüche 1 bis 11, dadurch gekennzeichnet, daß die Eintrittsfläche (21 ; 121 ; 221 ; 321) der vorstehenden Struktur (20 ; 120 ; 220 ; 320) mit optischem Prismaeffekt als Abstützung für das optische Hauptelement (70 ; 170 ; 270 ; 370) dient.

13. Optischer Verbinder nach einem der Ansprüche 1 bis 12, dadurch gekennzeichnet, daß mindestens eines der optischen Hilfselemente eine optische Faser (380A, 380B, 380C, 390) besitzt.

14. Optischer Verbinder nach einem der Ansprüche 1 bis 13, dadurch gekennzeichnet, daß mindestens eines der optischen Elemente (80, 90 ; 180, 190 ; 280, 290) ein optisches Sender- oder Empfängerelement besitzt.

15. Optischer Verbinder nach einem der Ansprüche 1 bis 14 in Kombination mit einem der Ansprüche 11 bis 13, dadurch gekennzeichnet, daß die Stirnfläche (72 ; 172 ; 272 ; 372) der optischen Fasern allgemein senkrecht zu ihrer Längsachse (71 ; 171 ; 271 ; 371) steht.

16. Optischer Verbinder nach einem der Ansprüche 1 bis 15, dadurch gekennzeichnet, daß die Positioniereinrichtungen (30, 40, 50 ; 130, 140, 150 ; 230, 240, 250 ; 330, 340A, 340B, 340C, 350) eine Ausnehmung aufweisen, welche komplementär zu einem Abschnitt mindestens des Außenmantels der optischen Elemente ist.

17. Optischer Verbinder nach Anspruch 16, dadurch gekennzeichnet, daß mindestens bestimmte der Ausnehmungen durch Rillen (30 ; 130 ; 230 ; 330, 340A, 340B, 340C, 350) gebildet sind, welche einen V-förmigen Querschnitt für die Aufnahme einer optischen Faser besitzen.

18. Optischer Verbinder nach Anspruch 17, dadurch gekennzeichnet, daß jeweils das zu der Struktur mit optischem Prismaeffekt (20 ; 120 ; 220 ; 320) entgegengesetzte Ende der Rillen (30 ; 130 ; 230 ; 330 ; 340A, 340B, 340C, 350) erweitert ist (32 ; 132 ; 232 ; 342A, 342B, 342C, 352), um die Einführung der optischen Fasern zu erleichtern.

19. Optischer Verbinder nach einem der Ansprüche 1 bis 18, dadurch gekennzeichnet, daß die optischen Elemente (70, 80, 90) auf den Träger geklebt sind.

20. Optischer Verbinder nach einem der Ansprüche 1 bis 18, dadurch gekennzeichnet, daß die optischen Elemente (470) mit Hilfe von elastischen Klemmstücken (460) auf den Positioniereinrichtungen (430) befestigt sind.

21. Optischer Verbinder nach Anspruch 20, dadurch gekennzeichnet, daß jedes elastische Klemmstück (460) einen Hebel (461) aufweist, welcher drehbar auf dem Träger (410) befestigt ist und mit Federkraft (463) in Richtung auf diesen zurückgestellt wird.

22. Optischer Verbinder nach einem der Ansprüche 1 bis 21, in welchem das optische Hauptelement eine optische Faser ist, dadurch gekennzeichnet, daß die Relativneigung $\alpha$ der ersten Austrittsfläche (22 ; 122 ; 222) der vorstehenden Struktur mit optischem Prismaeffekt (20 ; 120 ; 220) gegenüber der Normalen zur Eintrittsfläche (21 ; 121 ; 221) zwischen den Werten $\alpha_{max}$ und $\alpha_{min}$ liegt, welche durch die Beziehungen

$$\alpha_{max} = \frac{\pi}{2} + \arcsin\left(\frac{N.A.}{n_m}\right) - \arcsin\frac{1}{n_m} \quad \text{und}$$

$$\alpha_{min} = \arccos\frac{1}{n_m} - \arcsin\left(\frac{N.A.}{n_m}\right)$$

definiert sind wobei

$m_m$ den Index des den Träger bildenden Materials und
N.A. die numerische Apertur der Faser darstellt.

23. Optischer Verbinder nach Anspruch 22, dadurch gekennzeichnet, daß die Relativneigung $\alpha$ der ersten Austrittsfläche (22 ; 122 ; 322) der vorstehenden Struktur mit optischem Prismaeffekt bezüglich der Normalen zur Eintrittsfläche (21 ; 121 ; 221) zwischen 54,3° und 38,5° liegt.

FIG_1

FIG_2

FIG_3

FIG.4

FIG.5

FIG.6

FIG.7

FIG.8

FIG. 9

FIG. 10

FIG_11

FIG_12